**Europäisches Patentamt**

**European Patent Office**

**Office européen des brevets**

(19)

(11) Veröffentlichungsnummer : **0 361 249 B1**

(12) **EUROPÄISCHE PATENTSCHRIFT**

(45) Veröffentlichungstag der Patentschrift :
**25.03.92 Patentblatt 92/13**

(51) Int. Cl.5 : **H04R 17/00,** H04N 5/64,
G03B 21/56, H04R 1/02

(21) Anmeldenummer : **89117183.7**

(22) Anmeldetag : **16.09.89**

(54) **Bild-Tonwiedergabegerät.**

Verbunden mit 89910614.0/0435914
(europäische
Anmeldenummer/Veröffentlichungsnummer)
durch Entscheidung vom 07.08.91.

(30) Priorität : **26.09.88 DE 3832616
26.09.88 DE 3832617
12.05.89 DE 3915626**

(43) Veröffentlichungstag der Anmeldung :
**04.04.90 Patentblatt 90/14**

(45) Bekanntmachung des Hinweises auf die
Patenterteilung :
**25.03.92 Patentblatt 92/13**

(84) Benannte Vertragsstaaten :
**DE ES FR GB GR IT**

(56) Entgegenhaltungen :
**CH-A- 539 845
DE-A- 3 223 615
FR-A- 2 383 461
GB-A- 2 052 919
GB-A- 2 081 948
PATENT ABSTRACTS OF JAPAN, Band 9, Nr.
43 (E-298)[1766], 22. Februar 1985; & JP-A-59
183 581
PATENT ABSTRACTS OF JAPAN, Band 10, Nr.
228 (E-426)[2284], 8. August 1986; & JP-A-61 61
598**

(73) Patentinhaber : **E W D ELECTRONIC-WERKE
DEUTSCHLAND GMBH
W-7730 Villingen-Schwenningen (DE)**

(72) Erfinder : **Thiele, Karl-Heinz, Dipl.-Phys.
Lerchenweg 1
W-3150 Peine (DE)**

## Beschreibung

Die Erfindung geht aus von einem Bild-Tonwiedergabegerät mit einem Bildschirm und wenigstens zwei, als elektromechanische wandler ausgebildeten Lautsprechern.

Der Erfindung liegt die Aufgabe zugrunde, bei einem derartigen Gerät die räumlich Lage von Bildquelle und Tonquelle in Übereinstimmung zu bringen.

Diese Aufgabe wird durch die im Anspruch 1 angegebene Erfindung gelöst. Vorteilhafte Weiterbildungen der Erfindung sind in den Unteransprüchen angegeben.

Es ist bei Uhren und Miniaturradias bekannt (GB A 2 052 919), auf einer Glasscheibe über einem Zifferblatt-oder einer Skala eine als Lautsprecher dienende piezopolymere Folie vorzusehen. Dabei handelt es sich jedoch nicht um ein Bild-Tonwiedergabegerät mit einem Bildschirm, bei dem eine Übereinstimmung in der räumlichen Lage von Bildquelle und Tonquelle angestrebt wird. Aus sind dort auf der Glasscheibe nicht mehrere elektromechanische Wandler in Form piezopolymerer Folien angeordnet.

In der DE-A 32 23 615 wird auch ein elektromechanischer Wandler in Form einer piezopolymere Folie beschrieben. Dort wird ein besonders geeignetes Material für eine durchsichtige piezoelektrische Kunststoffolie für einen elektromechanischen Wandler angegeben. Dieser Wandler ist jedoch nicht in Form eines Lautsprechers auf dem Bildschirm eines Bild-Tonwiedergabegerätes angeordnet.

Es ist auch bekannt (Patent Abstracts of Japan, Volume 9, Nr. 43 (E-298)(1766) 22 February 1985), in den Ecken der Vorderfläche eines Fernsehempfängergehäuses außerhalb der sichtbaren Bildfläche elektromagnetische Vibratoren vorzusehen, die die Frontscheibe vor dem Bildschirm im Sinne eines Lautsprechers zum Schwingen bringen. Die Frontscheibe besteht dabei jedoch aus normalem Glas und ist nicht als piezopolymere Folie ausgebildet. Die Frontscheibe bildet vielmehr keinen aktiven elektromechanischen Wandler, sondern wird nur durch die außerhalb der Bildfläche vorgesehenen Vibratoren zum Schwingen zwecks Schallwiedergabe angeregt.

Bei der Erfindung wird am Gehäuse eines Fernsehempfängers für den Lautsprecher kein zusätzlicher Platz mehr benötigt, so daß sich neuartige Möglichkeiten beim Design eines Fernsehempfängers eröffnen. Es kommt zu einer optimalen Übereinstimmung in der räumlichen Lage von Bildquelle und Tonquelle, da Bild und Ton exakt von derselben Fläche, nämlich dem Bildschirm des Fernsehempfänger ausgehen. Ein solcher Lautsprecher mit einer piezopolymeren Folie hat insbesondere bei einem Fernsehempfänger den Vorteil, daß er kein Magnetfeld erzeugt, das die Ablenkung in der Bildröhre stören könnte.

Die Erfindung wird anhand der Zeichnung erläutert. Darin zeigen

Fig. 1 ein Beispiel für einen Fernsehempfänger,

Fig. 2 eine Beispiel für ein Bild,

Fig. 3 eine Weiterbildung der Erfindung für einen Lautsprecher zur Steuerung mit einem digitalen Tonsignal,

Fig. 4 eine Weiterbildung von Fig 3 mit ringförmigen Folien,

Fig. 5 einen Ausschnitt aus Fig. 4 mit maßstäblichem Flächenverhältnis,

Fig. 6 eine Weiterbildung von Fig. 5 für einen Fernsehempfänger,

Fig. 7 ein weiteres Ausführungsbeispiel der Erfindung und

Fig. 8 - 10 verschiedene Ansichten von Fig. 7.

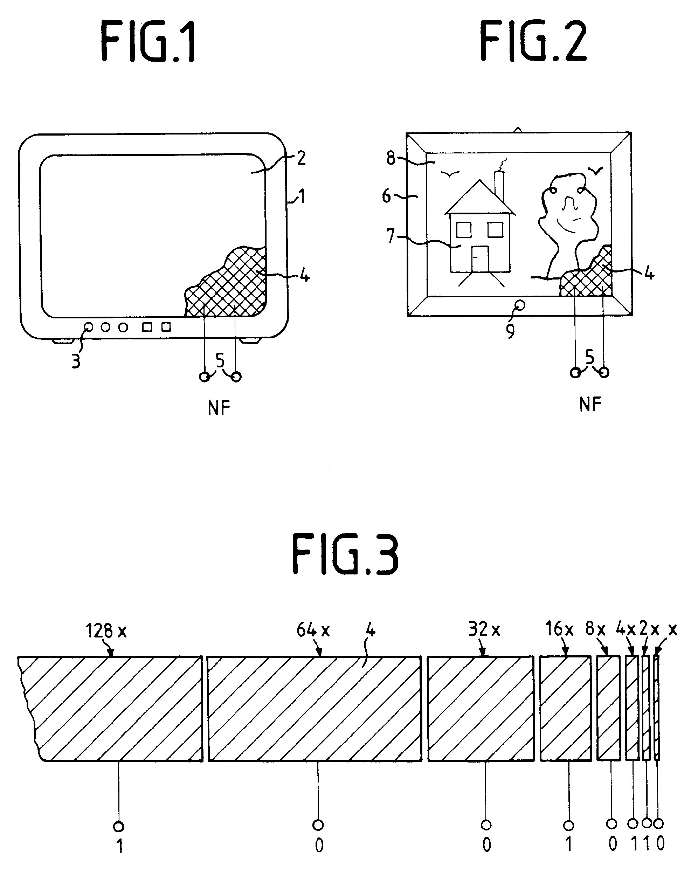

Fig. 1 zeigt einen Fernsehempfänger 1 mit dem Bildschirm 2 und den Bedienelementen 3. Auf den Bildschirm 2 ist die symbolisch kreuzschraffiert dargestellte, in Wirklichkeit nicht erkennbare transparente piezopolymere Folie 4 aufgebracht, die sich über den ganzen Bildschirm 2 erstreckt. Die dem Bildschirm 2 zugewandte Seite der Folie 4 ist mit dem Massepotential des Fernsehempfängers verbunden. Die Folie 4 ist an zwei Stellen, insbesondere außerhalb des sichtbaren Bildschirmbereiches kontaktiert. An die dadurch gebildeten Klemmen 5 ist das zur Bildwiedergabe gehörende NF-Tonsignal angelegt. Ein zusätzlicher Lautsprecher links, rechts oder unterhalb des Bildschirms 2 ist nicht mehr erforderlich.

Fig. 2 zeigt ein Bild mit dem Rahmen 6, der eigentlichen Bildvorlage 7 und der die Bildvorlage 7 abdeckenden Glasscheibe 8. Auf die Glasscheibe ist die transparente, als Lautsprecher dienende piezopolymere Folie 4 aufgebracht, die wie in Fig. 1 von den Klemmen 5 mit einem NF-Tonsignal gesteuert wird und als Lautsprecher dient. In den Rahmen 6 ist noch ein Einstellmittel 9 für die Lautstärke des durch die Folie 4 erzeugten Schallfeldes eingebaut.

Fig. 3 zeigt eine Weiterbildung zur Steuerung des Lautsprechers mit einem digitalen Tonsignal. Die Folie 4 ist in eine Vielzahl von Einzelfolien aufgeteilt deren Flächenverhältnisse in Zweierpotenzen abgestuft sind. Die Flächen der ein zelnen Teilfolien haben also Werte von x, 2x, 4x, 8x, 16x, 32x, 64x, 128x. An die einzelnen, je einen Lautsprecher bildenden Teilfolien sind die unterschiedlich wertigen Bits eine Digitalsignals angelegt. Die Teilfolien erzeugen somit entsprechend dem digitalen Signal je ein Schallfeld. Vom Zuhörer wird die Summe der von den einzelnen Teilfolien ausgehenden Schallfelder wahrgenommen, die dem eigentlichen analogen Tonsignal entspricht. Ein derartiger Lautsprecher wirkt quasi als mechanischer Digital-Analog-Wandler.

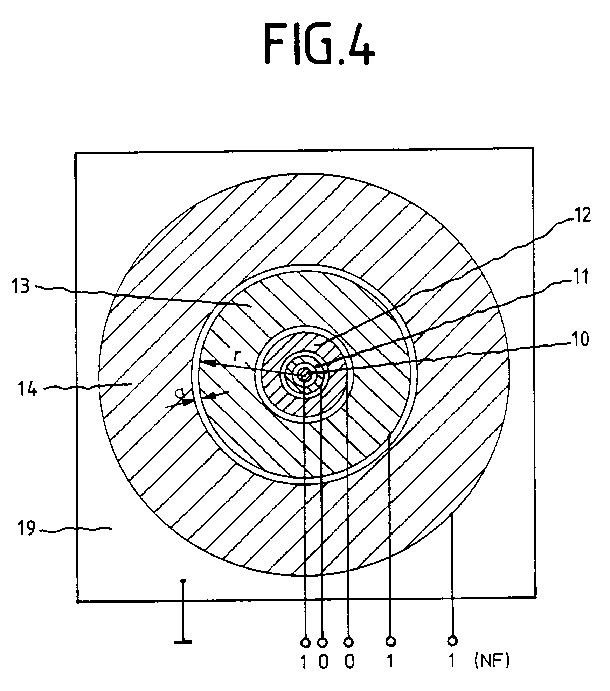

Fig. 4 zeigt eine Weiterbildung, bei der die Realisierung von Folien mit derart unterschiedlichen Flächen vereinfacht ist. Die einzelnen Folien liegen nicht in Form von Rechtekken nebeneinander, sondern sind als ringförmige, konzentrische Folien 10, 11, 12, 13, 14 ausgebildet, die auf einer Grundplatte 19 angeordnet sind und jeweils einen kleinen Abstand a von etwa 1 mm aufweisen. Da der jeweilige Radius r quadratisch in die Fläche eingeht, kann die Abstufung in der Fläche gemäß Fig. 4 besser realisiert werden. Wenn n die Ordnungszahl einer Folie und F die jeweilige Fläche der Folie ist, gilt allgemein die Beziehung $F_n = 2 * F_{n-1} = 2^{n-1} * F_1$. In Fig. 4 sind die dargestellten Flächen nicht maßstabsgerecht, entsprechen also nicht der geforderten Zweierpotenz.

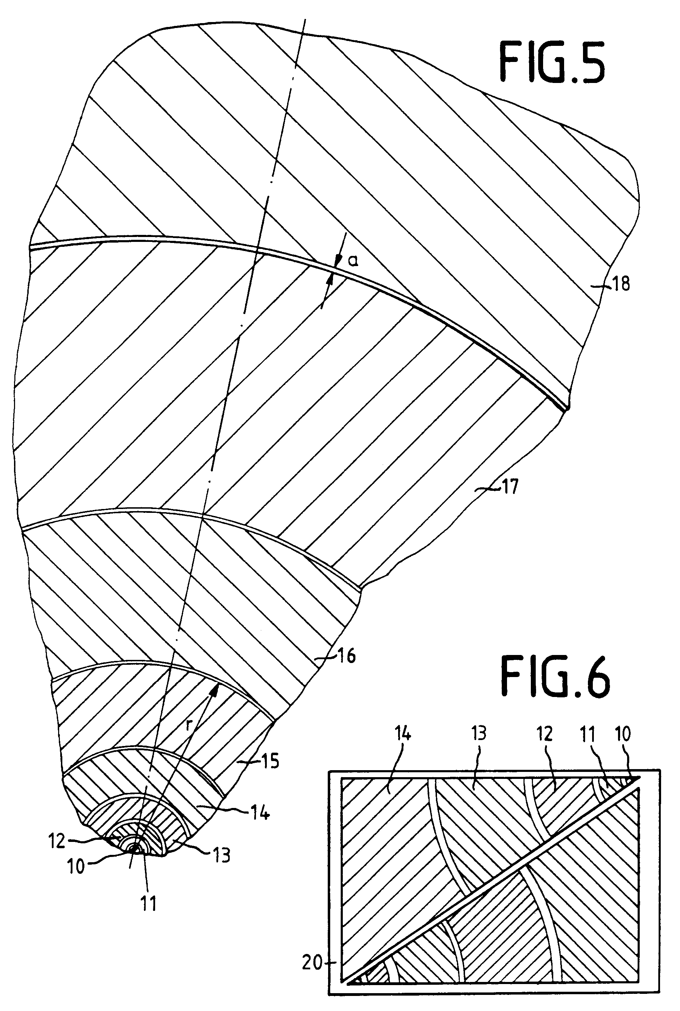

Fig. 5 zeigt einen allseitig abgebrochenen, sektorförmigen Ausschnitt aus einer Anordnung gemäß Fig. 4, bei der die Flächen der einzelnen Folien 10 bis 18 maßstabsgerecht entsprechend der Zweierpotenz dargestellt sind.

Für ein Ausführungsbeispiel mit acht ringförmigen, konzentrischen Folien 10 bis 17 für ein acht-Bit-digitales Tonsignal ergeben sich für die Ordnungszahl n, den jeweils äußeren Radius r einer Folie und den Abstand a zwischen zwei benachbarten Folien folgende Werte:

| n | r (mm) | r-a (mm) |
|---|--------|----------|
| 1 | 2 | 3 |
| 2 | 6,02 | 7,02 |
| 3 | 13,07 | 14,07 |
| 4 | 25,57 | 26,57 |
| 5 | 47,77 | 48,77 |
| 6 | 87,18 | 88,18 |
| 7 | 157,11 | 158,11 |
| 8 | 281,18 | 282,18 |

In Fig. 6 ist der Bildschirm 20 eines Fernsehempfängers durch eine Diagonale in zwei etwa dreieckförmige Flächen aufgeteilt. Jede dieser beiden dreieckförmigen Flächen enthält fünf segmentförmige Folien 10 bis 14 gemäß Fig. 5. Die beiden dreieckförmigen, einander gleichen Anordnungen können dann zur Wiedergabe eines Stereo-Tonsignals dienen.

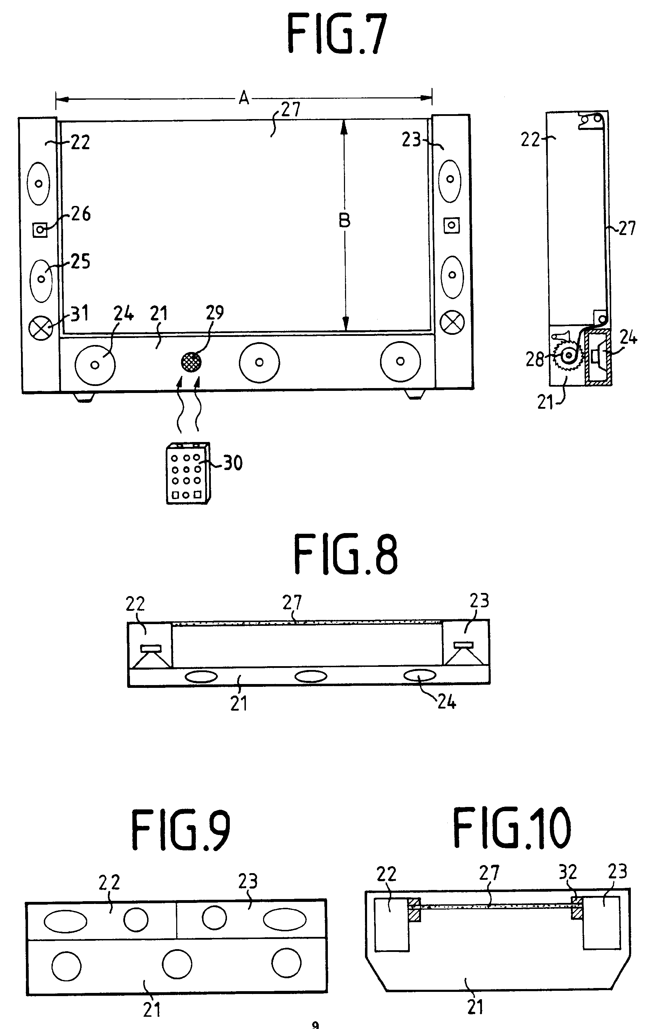

In Fig. 7 sind auf einem waagerecht angeordneten Fußteil 21 im Abstand A zwei senkrecht stehende Gehäuseteile 22, 23 angeordnet. Das Fußteil 21 enthält Tiefton-Lautsprecher 24, während die Gehäuseteile 22 ,23 Breitband-Lautsprecher 25 und Hochton-Lautsprecher 26 enthalten. In der durch die Teile 21, 22, 23 gebildeten Öffnung ist eine Leinwand 27 für die Projektion eines Bildes von einem Fernsehprojektor angeordnet. Die Leinwand 27 ist über eine Aufwickelvorrichtung 28 in dem Fußteil 21 versenkbar. Das Fußteil 1 enthält einen Infrarot-Empfänger 29 für die Signale einer Fernbedieneinheit 30, mit der über aktiv ausgebildete Boxen Parameter der Tonwiedergabe wie Lautstärke, Höhen, Tiefen und Stereobalance fernbedienbar sind. Außerdem sind in dem Fußteil 21 oder den Gehäuseteilen 22, 23 Leuchten 31 vorgesehen, die ebenfalls mit der Fernbedieneinheit 30 in der Helligkeit gesteuert oder ein- und ausgeschaltet werden können.

Fig. 8 ist eine Draufsicht auf die Anordnung nach Fig. 7. Die Leinwand 7 ist stramm zwischen den Gehäuseteilen 22, 23 eingespannt.

In Fig. 9 sind das Fußteil 21 und die Gehäuseteile 22, 23 zu einer kompakten Einheit zusammengelegt, wobei die Leinwand 27 in dem Fußteil 21 versenkt ist.

Fig. 10 zeigt in einer Draufsicht, wie die Leinwand 27 mittels Führungen 32 an den Gehäuseteilen 22, 23 geführt ist, damit sie für eine einwandfreie Bildprojektion möglichst in einer Ebene liegt und nicht wellig wird.

Die Gehäuseteile 22, 23 können in unterschiedlichen Abständen A auf das Fußteil 21 aufsetzbar ausgebildet sein, um die Unterbringung von Leinwänden mit unterschiedlichem Seitenverhältnis A/B zu ermöglichen. In der Praxis kommen im wesentlichen für das Seitenverhältnis folgende Werte in Betracht:

| A/B | Anwendung |
|---|---|
| 4:3 | Fernsehen, Super-8-Projektion |
| 5:3 | |
| 5:4 | |
| 16:9 | HDTV-Projektion |
| 36:24 | Diaprojektion |

Die Leinwand 27 ist mit einer sich über die gesamte Fläche oder einen Teil der Fläche erstrekkenden piezopolymeren Folie versehen oder selbst als eine solche Folie ausgebildet. Eine solche Folie bildet eine Membran mit einer piezoelektrisch steuerbaren Dicke und kann zusätzlich als Lautsprecher, insbesondere als Mitteltonlautsprecher dienen. Die Dickeänderungen der Folie bei der Wirkung als Lautsprechermembran betragen nur wenige μm und haben auf die Bildwiedergabe keinen nachteiligen Einfluß. Dabei ist die Folie vorzugsweise entlang einer senkrechten Mittellinie in zwei getrennte Folien aufgeteilt, die je einen Lautsprecher für eine Stereo-Tonwiedergabe bilden. Die als Lautsprecher dienende Folie kann auch im Blickrichtung hinter der Leinwand 27 angeordnet sein. Es ist auch möglich, die gesamte Fläche der Leinwand 27 in eine größere Zahl getrennter piezopolymerer Folien aufzuteilen, die je einen elektrostatischen Lautsprecher für unterschiedliche Frequenzbereiche oder Kanäle einer Mehrkanal-Tonwiedergabe darstellen. Diese Lösung hat den Vorteil, daß die durch die Leinwand 27 eingenommene Fläche zusätzlich als Lautsprecher dient und somit der sonst für die Mittelton-Lautsprecher eingenommene Platz der gesamten Einrichtung eingespart wird. Gegebenenfalls können dann die beiden Gehäuseteile 22, 23 kleiner ausgebildet sein, nur als Stütze für die Leinwand 27 dienen oder ganz entfallen, wenn die Leinwand selbsttragend ausgebildet ist.

## Patentansprüche

1. Bild-Tonwiedergabegerät mit einem Bildschirm und wenigstens zwei, als elektromechanischer Wandler ausgebildeten Lautsprechern, dadurch gekennzeichnet, daß die elektromechanischem Wandler als transparente piezopolymere Folien (4) auf dem Bildschirm (2) angeordnet sind.

2. Gerät nach Anspruch 1, dadurch gekennzeichnet, daß die Folien (4) auf dem Bildschirm (2) eines Fernsehemfängers (1) oder Monitors oder die Glasscheibe (8) aufgebracht sind.

3. Gerät nach Anspruch 1, dadurch gekennzeichnet, daß die Wandler durch piezopolymere Folien (10 - 14) unterschiedlicher Fläche ausgebildet sind.

4. Gerät nach Anspruch 3, dadurch gekennzeichnet, daß die Flächen der Folien (10 - 14) in Zweierpotenzen (1, 2 , 4 , 8 , 16 , 32 ...) abgestuft sind.

5. Gerät nach Anspruch 3, dadurch gekennzeichnet, daß die Folien (10 - 14) in Form von kozentrischen, beabstandeten Ringrn mit nach außen hin zunehmender Breite ausgebildet sind.

6. Gerät nach Anspruch 1, dadurch gekennzeichnet, daß die piezopolymere Folien auf eine Projektionwand (27) aufgebracht sind.

## Claims

1. Picture sound-reproduction device with a screen and at least two speakers constructed as electromechanical transducers, **characterised in that** the electromechanical transducers are arranged as transparent piezopolymeric films (4) on the screen (2).

2. Device according to claim 1, **characterised in that** the films (4) are attached to the screen (2) of a television receiver (1) or monitor or to the glass pane (8).

3. Device according to claim 1, **characterised in that** the transducers are formed by piezopolymeric films (10 - 14) of varying area.

4. Device according to claim 3, **characterised in that** the areas of the films (10 - 14) are graduated in powers of two (1, 2, 4, 8, 16, 32 ...).

5. Device according to claim 3, **characterised in that** the films (10 - 14) are constructed in the form of concentric, spaced rings of increasing width in the outward direction.

6. Device according to claim 1, **characterised in that** the piezopolymeric films are attached to a projection wall (27).

**Revendications**

1. Appareil de reproduction d'images et de son avec un écran et au moins deux haut-parleurs configurés comme des convertisseurs électromécaniques, **caractérisé en ce** que les convertisseurs électromécaniques sont placés en tant que feuilles piézopolymères (4) sur l'écran (2).

2. Appareil selon la revendication 1, **caractérisé en ce** que les feuilles (4) sont appliquées sur l'écran (2) d'un récepteur de télévision (1) ou d'un moniteur ou sur la plaque de verre (8).

3. Appareil selon la revendication 1, **caractérisé en ce** que les convertisseurs sont formés par des feuilles piézopolymères (10-14) de différentes surfaces.

4. Appareil selon la revendication 3, **caractérisé en ce** que les surfaces des feuilles (10-14) sont échelonnées par puissances deux (1, 2, 4, 8, 16, 32...).

5. Appareil selon la revendication 3, **caractérisé en ce** que les feuilles (10-14) sont configurées en forme d'anneaux concentriques espacés d'une largeur croissante vers l'extérieur.

6. Appareil selon la revendication 1, **caractérisé en ce** que les feuilles piézopolymères sont appliquées sur un écran de projection (27).

# FIG.1

# FIG.2

# FIG.3

# FIG.4

# FIG.5

a

18

17

16

r

15

14

13

12

10

11

# FIG.6

14   13   12   11   10

20

# FIG.7

# FIG.8

# FIG.9

# FIG.10